Europäisches Patentamt

European Patent Office

Office européen des brevets

(19)

(11) EP 1 156 592 A2

(12) EUROPEAN PATENT APPLICATION

(43) Date of publication:
21.11.2001 Bulletin 2001/47

(51) Int Cl.⁷: H04B 1/707

(21) Application number: 01000136.0

(22) Date of filing: 02.05.2001

(84) Designated Contracting States:
AT BE CH CY DE DK ES FI FR GB GR IE IT LI LU
MC NL PT SE TR
Designated Extension States:
AL LT LV MK RO SI

(30) Priority: 19.05.2000 FI 20001208

(71) Applicant: NOKIA MOBILE PHONES LTD.
02150 Espoo (FI)

(72) Inventors:
• Lilleberg, Jorma
90800 Oulu (FI)
• Wang, Haifeng
90570 Oulu (FI)

(74) Representative: Brockman, Pertti Erik
Kolster Oy Ab,
P.O. Box 148,
Iso Roobertinkatu 23
00121 Helsinki (FI)

(54) A reception method and a CDMA receiver

(57) The invention relates to a receiving method and a CDMA receiver, comprising means (360, 362) to receive signals of several users, and the signals consisting of symbols, the receiver comprising: a first reception stage (366a - 366d) for processing the received signals and obtaining first estimates for the symbols contained in the signal, at least one additional stage (370) for setting up a sliding window having a given length of symbols, estimating values for two symbols inside the window, and sliding the window ahead until received symbols have been processed. The receiver of the invention further comprises means (370) for dividing the sliding window into three sections, where one section comprises the two symbols to be estimated, another section comprises symbols for which estimates obtained from the previous window positions are used during the estimation of the first section and a third section comprises symbols for which estimates obtained by the first stage are used during the estimation of the first section, and means (370) for saving the value of the oldest symbol of the first section as the final estimated value for that symbol of the stage.

Fig. 3

EP 1 156 592 A2

**Description**

**Field of the invention**

The invention relates to a reception method and a receiver to be used in a CDMA system, in which signals of several users are detected simultaneously from a received signal.

**Description of the related art**

CDMA is a multiuser communication scheme based on spread-spectrum technique. Besides the previously widely used FDMA and TDMA methods CDMA has recently been applied in cellular radio systems. CDMA has several advantages compared to the previous methods, including simplicity of frequency planning and spectrum efficiency.

In the CDMA method, a narrow-band user data signal is multiplied to a relatively broad band by a spreading code having a considerably broader band than the data signal. In some known test systems, bandwidths such as 1,25 MHz, 10 MHz and 25 MHz have been used. When multiplied, the data signal is spread to the entire band to be used. All users transmit simultaneously using the same frequency band. A separate spreading code is used on each connection between a base station and a mobile station, and the signals of different users can be distinguished from each other in the receivers on the basis of each user's spreading code. The purpose is to select the spreading codes in such a way that they are mutually orthogonal, i.e. they do not correlate with each other.

Correlators in a CDMA receiver implemented in a conventional manner are synchronized with a desired signal, which is detected on the basis of a spreading code. The data signal is returned to the original band in the receiver by remultiplying it by the same spreading code as at the transmission stage. In an ideal case, the signals multiplied by some other spreading code do not correlate and do not return to the narrow band. Thus they appear as noise with respect to the desired signal. Accordingly, the aim is to detect a desired user's signal from among several interfering signals. In practice, spreading codes are not decorrelatable and other users' signals make the detection of the desired signal more difficult by distorting the received signal nonlinearly. This interference caused by the users to each other is called multiuser interference.

The single-user detection method described above is not optimal, because, in the detection, it ignores the information included in the signals of other users. Additionally, conventional detection is not capable of correcting nonlinearities, which are partially caused by nonorthogonal spreading codes and the distortion of a signal on a radio path. An optimum receiver considers the information included in the signals of all users so that the signals may be detected optimally by the Viterbi algorithm, for instance. An advantage of this detection method is that bit error ratio curves of the receiver resemble a situation in the single-user CDMA system with no multiuser interferences occurring. No near-far problem exists, for instance. A near-far problem refers to a situation when a transmitter close to a receiver covers with its transmission the transmitters located farther away. The most serious deficiency of the Viterbi algorithm is that the computational intensity required increases exponentially with an increasing number of users. For instance, a ten-user system having a bit rate of 100 kbit/s using QPSK modulation would require 105 million of measures per second for the computation of likelihood function. In practice, this prevents the implementation of an optimum receiver.

An optimum receiver can, however, be approximated by different methods. As prior art are known different kinds of methods for simultaneous multiuser detection. The best known methods include linear multiuser detector, decorrelating detector and multistage detector. These methods are described in more detail in the references Varanasi, Aazhang; Multistage detection for asynchronous code division multiple access communications, IEEE Transactions on Communications, vol 38, pp. 509-519, Apr 1990, Lupas, Verdu: Linear multiuser detectors for synchronous code-division multiple access channels, IEEE Transactions on Information Theory, vol 35, no. 1, pp. 123-136, Jan 1989, and Lupas, Verdu: Near-far resistance of multiuser detectors in asynchronous channels, IEEE Transactions on Communications, vol 38, Apr 1990 which are incorporated here in by reference.

In most known multiuser detection methods the symbols are estimated one at a time, and some reasonable initial estimates for the rest of the symbols are assumed. This process is repeated for all symbols. The whole estimation process is typically repeated for a given number of times in order to get a reliable estimation result.

All these methods have, however, the drawback that they do not perform well especially in heavily loaded systems where there are many simultaneous users.

**Brief description of the invention**

It is an object of the invention to provide a method and an apparatus by which multiuser detection can be performed with a good performance without excessive complexity.

The invention relates to a reception method to be used in a CDMA system, in which signals of several users are detected simultaneously from a received signal, the signals consisting of symbols, the method comprising: processing the received symbols by a first reception stage, obtaining first estimates for the symbols from the first stage, processing the estimated symbols in at least one additional stage, the processing comprising: setting up a sliding window having a given length of symbols, estimating values for two symbols inside the window, sliding the window ahead until received symbols have been processed. The method of the invention further comprises the steps of dividing the sliding window into three sections, where one section comprises the two symbols to be estimated, another section comprises symbols for which estimates obtained from the previous window positions are used during the estimation of the first section and a third section comprises symbols for which estimates obtained by the first stage are used during the estimation of the first section, and saving the value of the oldest symbol of the first section as the final estimated value for that symbol of the stage.

The invention relates also to a CDMA receiver, comprising means to receive signals of several users, and the signals consisting of symbols, the receiver comprising: a first reception stage for processing the received signals and obtaining first estimates for the symbols contained in the signal, at least one additional stage for setting up a sliding window having a given length of symbols, estimating values for two symbols inside the window, and sliding the window ahead until received symbols have been processed. The receiver further comprises means for dividing the sliding window into three sections, where one section comprises the two symbols to be estimated, another section comprises symbols for which estimates obtained from the previous window positions are used during the estimation of the first section and a third section comprises symbols for which estimates obtained by the first stage are used during the estimation of the first section, and means for saving the value of the oldest symbol of the first section as the final estimated value for that symbol of the stage.

The approach according to the preferred embodiments of the present invention requires 50% more computation than the conventional multistage detection of Varanasi and Aazhang, if they both have the same number of iterations. However, the method according to the preferred embodiments requires less iteration in order to achieve a reliable result, so the total computational complexity is considerably lower than in the known methods.

## Brief description of the drawings

In the following, the invention will be described in greater detail with reference to the examples according to the attached drawings, in which

Figure 1 illustrates an example of the structure of a mobile telephone system where the invention may be applied,
Figure 2 illustrates another example of the structure of a mobile telephone system,
Figure 3 illustrates a receiver structure,
Figure 4 illustrates the sliding window used in the estimation, and
Figure 5 illustrates the estimation process.

## Detailed description of the preferred embodiments

Hereinafter, the use of the invention will be described in a mobile telephone system using a broadband code divisional multiple access method implemented by direct sequence technique (WCDMA).

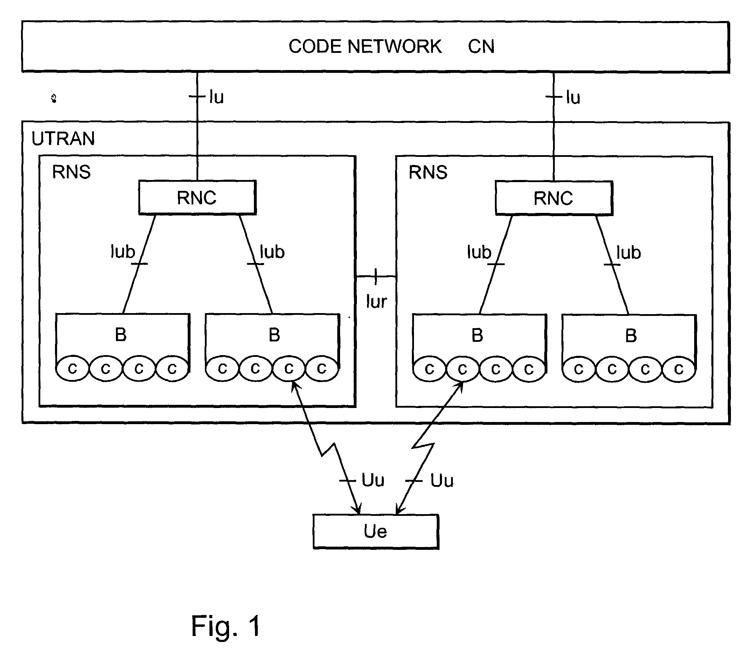

Referring to Figure 1, the structure of a mobile telephone system of the invention will be described. The main parts of the mobile telephone system include a core network CN, a UMTS terrestrial radio access network UTRAN, and user equipment UE. The interface between the CN and the UTRAN is called lu, and the air interface between the UTRAN and the UE is called Uu.

The radio connection network comprises radio network subsystems RNS. The interface between the subsystems is called lur. Each radio network subsystem RNS comprises a radio network controller RNC and one or more nodes B. The interface between the radio network controller RNC and the node B is called lub. The coverage area of node B, i.e. the cell, is denoted by C in Figure 1.

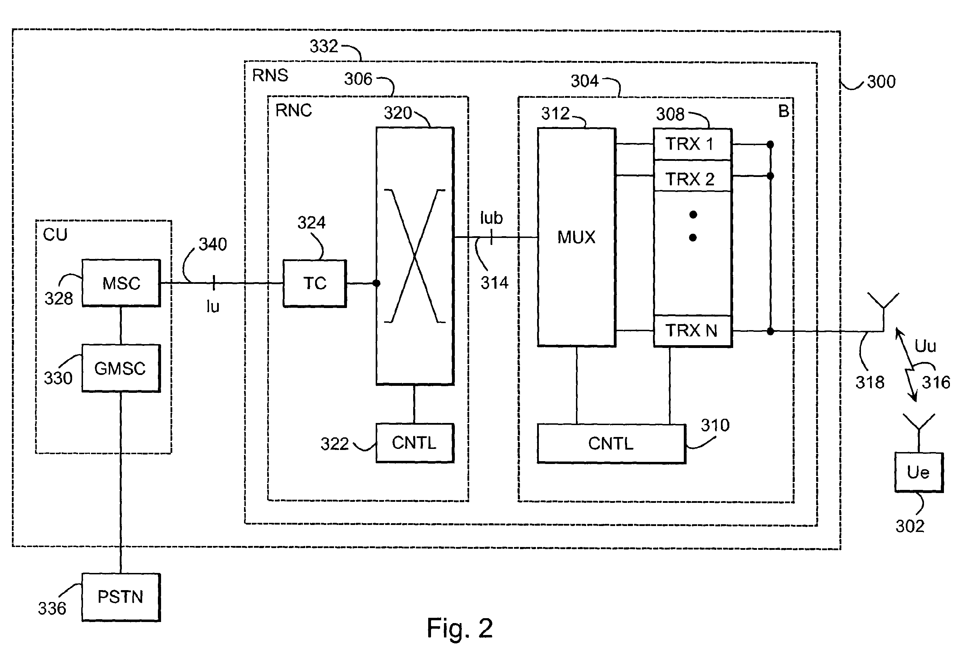

Being rather abstract, the description in connection with Figure 1 will be further clarified by a more detailed example of the cellular radio system in Figure 2. Figure 2 only comprises the most essential blocks, but it is obvious to those skilled in the art that a common cellular radio network also comprises other functions and structures that need not be explained here in greater detail. It should also be noted that Figure 2 shows only one structure by way of example. The details in the above systems developed by standardisation bodies, such as ARIB and ETSI organizations, for example, may differ from those shown in Figure 2, the differences being, however, irrelevant to the invention.

Typically, a cellular radio network thus comprises a fixed network infrastructure, i.e. a network part 300, and user equipment 302 that can be positioned fixedly, located in a vehicle or portable. The network part 300 comprises base stations 304. A base station corresponds to node B in the previous figure. A radio network controller 306, in turn, communicating with several base stations 304 controls these base stations in a centralized manner. The base station 304 comprises transceivers 308 and a multiplexer unit 312.

The base station 304 further comprises a control unit 310 controlling the operation of the transceiver 308 and the multiplexer 312. The multiplexer 312 places the traffic channels and control channels used by several transceivers 308 over one transmission connection 314. The transmission connection 314 forms the interface lub.

The transceivers 308 of the base station 304 communicate with an antenna unit 318 implementing a duplex radio connection 316 to the user equipment 302. The structure of frames transmitted on the duplex radio connection 316 is defined system-specifically and it is called the air interface Uu.

The radio network controller 306 comprises a group switch 320 and a controller unit 322. The group switch 320 is used for switching speech and data and for connecting signalling circuits. A radio network subsystem 332 comprising the base station 304 and the radio network controller 306 further comprises a transcoder 324. The transcoder 324 is usually located as close to a mobile services switching centre 328 as possible since speech can then be transmitted in a cellular radio network form between the transcoder 324 and the radio network controller 306 using as little transmission capacity as possible.

The transcoder 324 converts the different digital coding forms of speech used between the public telephone network and the radio telephone network into compatible ones, for example from the fixed network form into another form of the cellular radio network and vice versa. The control unit 322 carries out call control, mobility management, collection of statistical data and signalling.

A core network CN comprises the infrastructure of the mobile telephone system external to the radio connection network. The units of the core network CN shown in Figure 2 include the mobile switching centre 328 and a gate mobile services switching centre 330 responsible for the connections of the mobile telephone system to the external world; in this connection, to a public telephone network 336. An interface 340 between the core network CN and the radio connection network is thus called lu.

Let us next consider an exemplary description of a system where the preferred embodiments of the invention may be applied. One such system is an asynchronous CDMA system where $K$ users transmit data simultaneously through $K$ independent Raleigh fading channels. A model of the received signal at a particular receiver for this CDMA system is given by

$$r = SAb + n \tag{1}$$

where $\boldsymbol{S}$ is the matrix that contains the discrete time spectrum-spreading waveform samples for each of the users and their symbols, $\boldsymbol{A}$ is the diagonal matrix containing all the complex attenuation coefficients of each user's each symbol, $\boldsymbol{b}$ is the column vector of all symbols of each user and $\boldsymbol{n}$ is the vector of white Gaussian noise samples. The purpose of the receiver is thus to find out the values contained in $\boldsymbol{b}.$

It can be assumed that the channel fades slowly. It implies that the multiplicative process in equation (1) may be regarded as a constant during one signalling interval. This condition does hold in many applications since the observation interval is often much shorter than the coherence time of the channel, which characterizes the time-variant behavior of the propagation media. It is also assumed that the relative delays of all the users have been obtained through a synchronization device. The method of the invention is, however, not limited to these cases, as is evident for a person skilled in the art.

When all or a subset of all user codes are known, a multiuser detector can be employed. The goal of the multiuser detector is to detect symbols of all users simultaneously. To illustrate the invention, the optimal multiuser detector solution is briefly presented here. The received signal is first correlated in matched filters. By applying the maximum likelihood principle the following formula is obtained:

$$\hat{b} = \underset{b}{\mathrm{argmax}} \quad \{2\mathrm{Re}(\boldsymbol{b}^H \boldsymbol{z}) - \boldsymbol{b}^H \boldsymbol{A}^H \boldsymbol{RAb}\} \tag{2}$$

where ()$^H$ denotes conjugate transpose, $\boldsymbol{z} = \mathbf{A}^H\mathbf{S}^H\mathbf{r}$ is the vector outputs of the matched filters and $\mathbf{R} = \mathbf{S}^H\mathbf{S}$ represents the cross-correlations between the spreading signals. The optimum detector requires heavy computations and is not realizable in practical receivers.

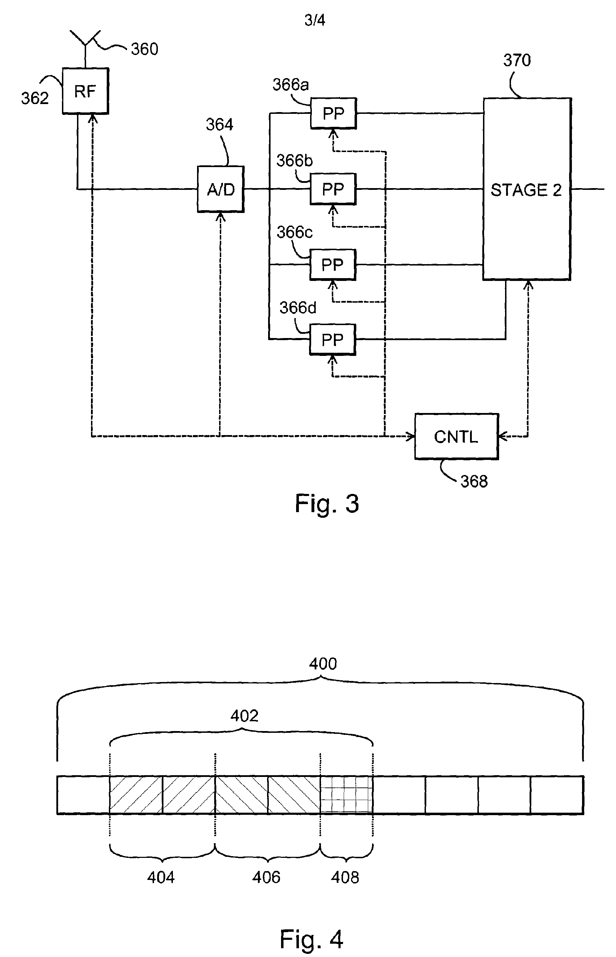

An example of the structure of a multistage multiuser detector of a preferred embodiment of the invention is illustrated in Figure 3. The receiver comprises an antenna 360, by which a received signal is brought via radio frequency parts 362 to an A/D converter 364. The converted signal is brought to means 366a to 366d which preprocess the received signal. In a preferred embodiment of the invention, the means are realized with matched filters. The means may be realized e.g. by RAKE receivers, each of them receiving a signal transmitted by one user. The receiver additionally comprises a control unit 368 controlling the operation of the device. Each RAKE receiver includes several separate correlators, each of them capable of receiving one multipath propagated signal component. These received signal components are preferably combined in a RAKE receiver.

Consequently, each RAKE receiver 366a to 366d receives signal of one user (and its multipath propagated components). From each RAKE receiver, the signal is brought to the second stage of the receiver 370, the function of which will be described later. In practice, the second stage can be a processor with suitable programming, or it can be realized with the aid of digital discrete components and circuits.

The choice for the structure of the first stage is important not only in the performance of the multistage detector, but also in simplifying the error probability analysis. In one preferred embodiment of the invention a conventional detector can be chosen for the first stage for reasons of conceptual simplicity in implementation and analysis, such as,

$$b(1) = \text{sgn}[\text{Re}(z)].$$

This initial assignment implies that the multistage detector aims at improving the conventional decision on the information bits. Other sub-optimum initial conditions can be substituted depending on how much computation one is willing to perform. It is important, as it is for any iterative solution, that a reasonably good initial estimate is available. The optimum demodulation of each symbol requires the observation of the received signal for its entire duration. Hence, it is necessary that, for the $M$-stage detector performance to approach near-optimality as $M$ increases, the time interval over which the demodulator would have to process the received signal for the demodulation of a certain symbol should increase.

Next let us study the function of the second stage 370 more closely. It should be noted here that although a two-stage structure is described in this example, the invention is not limited to two stages. At the second stage the initial estimates from the previous stage are available. The purpose is thus to obtain better estimates for the symbols. The symbols are processed using a sliding window of a given length of symbols. A typical length for the sliding window in a preferred embodiment is five consecutive symbols. During each phase of the estimation only two symbols of the sliding window are estimated. In the preferred embodiment of the invention, these symbols are consecutive symbols of the same user, but this is not always necessarily the case. In the preferred embodiment of the invention, the sliding window is divided into three sections. One section of the window comprises two symbols to be estimated. Another section comprises symbols for which estimates obtained from previous window positions are used during the estimation of the first section, and the third section comprises symbols for which estimates obtained by the first stage are used during the estimation of the first section. The value of the oldest symbol of the first section is saved as the final estimated value for that symbol of the stage. Then the sliding window is moved, and the process is repeated.

The formula used in the estimation process can be defined as:

$$\begin{bmatrix} [\boldsymbol{b}(m+1)_{k,l}] \\ [\boldsymbol{b}(m+1)_{k,l+1}] \end{bmatrix} = \underset{\substack{[\boldsymbol{b}]_{k,l} \\ [\boldsymbol{b}]_{k,l+1}}}{\text{argmax}} \quad \{2\text{Re}(\boldsymbol{b}^H \boldsymbol{z}) - \boldsymbol{b}^H \boldsymbol{A}^H \boldsymbol{R} \boldsymbol{A} \boldsymbol{b}\} \Bigg|_{\substack{[\boldsymbol{b}]_{i,j} = [\boldsymbol{b}(m)]_{i,j} \\ \forall i,j \,;\, i \neq k \ \text{and} \ j \neq l}} \quad (3)$$

where $[\boldsymbol{b}(m)]_{k,l}$ is $m$th stage estimate of $k$th user's $l$th symbol, $()^H$ denotes conjugate transpose, $\boldsymbol{z} = \boldsymbol{A}^H \boldsymbol{S}^H \mathbf{r}$ is the vector outputs of the matched filters and $\mathbf{R} = \boldsymbol{S}^H \boldsymbol{S}$ represents the cross-correlations between the spreading signals.

Figure 4 illustrates the use of the sliding window. In the figure some consecutive symbols 400 are displayed. In this example, the sliding window 402 in which the symbols are processed is five symbols long. After performing the estimation in the window, the window is moved to the right at given steps. In the preferred embodiment the step size is one symbol. The sliding window comprises three sections. The leftmost section 404 comprises symbols that have already been estimated in the previous sliding windows. During this sliding window, their values will not be changed. The next section 406 comprises symbols that are being estimated during this sliding window. The last section 408 comprises symbols which have values determined in the previous stage of the receiver, in this example in rake fingers.

The values for the symbols in the middle section 406 are estimated so that they satisfy the formula (3) for all users. In the case of BPSK modulation, the symbols of the middle section are evaluated with values [-1,+1] and [-1,-1]. It is not necessary to test all possible combinations of the symbols as only the value of the leftmost bit of the section is saved as the final value. As the sliding window is moved by one symbol, the rightmost bit will be evaluated also in the next phase and the final value will be calculated there.

As in conventional multistage reception, only one bit is estimated at a time, the solution according to the preferred embodiments, where two bits are estimated, requires more computation. However, the solution presented here does not need as many iterations to achieve the desired accuracy compared with known methods, so the total complexity of the system is lower.

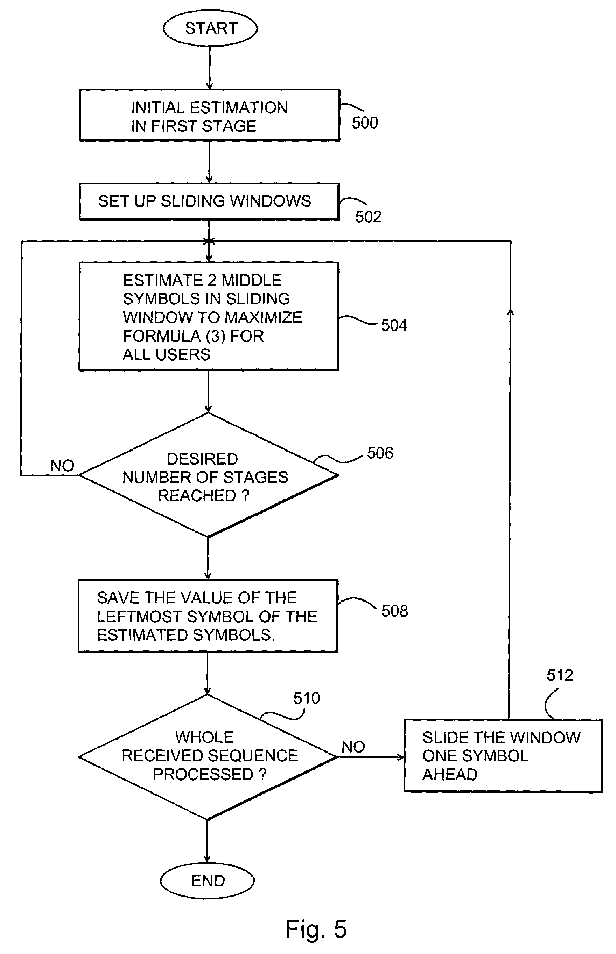

The operation performed is illustrated also in Figure 5 as a flowchart. First the initial estimation 500 based on the outputs of the matched filters is performed. Second, a sliding window is set up 502. Then two middle symbols in the sliding window are estimated to maximize equation (3) in step 504. This estimation is performed on the signals of all users. The local estimation will be changed and used immediately when the next user's consecutive symbols are estimated. Step 504 can be repeated until desired number of steps 506 has been reached. In phase 508 the value of the leftmost bit of the estimated symbols is saved as the final value. If the whole received symbol sequence has not been processed 510, the sliding window is moved one symbol ahead 512 and step 504 is performed in the new sliding window.

Even though the invention has been described above referring to the examples of the attached drawings, it is obvious that the invention is not restricted to them, but it can be modified in many ways within the scope of the inventive idea set forth in the attached claims.

**Claims**

1. A reception method to be used in a CDMA system, in which signals of several users are detected simultaneously from a received signal, the signals consisting of symbols, the method comprising:

   processing the received symbols by a first reception stage,
   obtaining first estimates for the symbols from the first stage,
   processing the estimated symbols in at least one additional stage, the processing comprising:

   setting up a sliding window having a given length of symbols,
   estimating values for two symbols inside the window,
   sliding the window ahead until the received symbols have been processed,**characterized by**
   dividing the sliding window into three sections, where
   one section comprises the two symbols to be estimated,
   another section comprises symbols for which estimates obtained from the previous window positions are used during the estimation of the first section and
   a third section comprises symbols for which estimates obtained by the first stage are used during the estimation of the first section, and
   saving the value of the oldest symbol of the first section as the final estimated value for that symbol of the stage.

2. A method according to claim 1, **characterized in that** the two estimated symbols are symbols of the same user.

3. A method according to claim 1, **characterized in that** the two estimated symbols are two consecutive symbols of the same user.

4. A method according to claim 3, **characterized by** estimating the same consecutive symbols of each user one after another before moving the sliding window.

5. A method according to claim 4, **characterized by** repeating the estimation of the two symbols of each user a given number of times.

6. A method according to claim 5, **characterized in that** the estimation is repeated until the desired accuracy has been reached.

7. A method according to claims 1 to 6, **characterized in that** the size of the sliding window is five symbols.

8. A method according to claim 1, **characterized in that** the sliding window is moved ahead by one symbol at a time.

9. A method according to claim 8, **characterized in that** in the next sliding window one of the symbols of the first section is the same as in the previous sliding window.

10. A method according to claim 9, **characterized in that** the symbol which is the same is a symbol whose value was not saved in the previous window.

**11.** A CDMA receiver, comprising means (360, 362) to receive signals of several users, and the signals consisting of symbols, the receiver comprising:

a first reception stage (366a - 366d) for processing the received signals and obtaining first estimates for the symbols contained in the signal,

at least one additional stage (370) for setting up a sliding window having a given length of symbols, estimating values for two symbols inside the window, and sliding the window ahead until received symbols have been processed, **characterized by** the receiver further comprising

means (370) for dividing the sliding window into three sections, where one section comprises the two symbols to be estimated, another section comprises symbols for which estimates obtained from the previous window positions are used during the estimation of the first section and third section comprises symbols for which estimates obtained by the first stage are used during the estimation of the first section, and

means (370) for saving the value of the oldest symbol of the first section as the final estimated value for that symbol of the stage.

**12.** A receiver according to claim 11, **characterized in that** the means (370) are arranged to estimate two consecutive symbols of the same user inside the sliding window.

**13.** A receiver according to claim 12, **characterized in that** the means (370) are arranged to estimate the same consecutive symbols of each user one after another before moving the sliding window.

**14.** A receiver according to claim 11, **characterized in that** the means (370) are arranged to repeat the estimation of the two symbols of each user a given number of times.

Fig. 1

Fig. 2

EP 1 156 592 A2

Fig. 3

Fig. 4

```
                        ┌─────────┐
                        │  START  │
                        └────┬────┘
                             │
                             ▼
              ┌──────────────────────────┐
              │   INITIAL ESTIMATION     │ ──╮  500
              │   IN FIRST STAGE         │   │
              └──────────────┬───────────┘
                             │
                             ▼
              ┌──────────────────────────┐
              │   SET UP SLIDING WINDOWS │ ──╮  502
              └──────────────┬───────────┘
                             │
                             ▼
              ┌──────────────────────────┐
              │   ESTIMATE 2 MIDDLE      │
              │   SYMBOLS IN SLIDING     │ ──╮  504
              │   WINDOW TO MAXIMIZE     │
              │   FORMULA (3) FOR        │
              │   ALL USERS              │
              └──────────────┬───────────┘
                             │
                             ▼
        NO         ◇ DESIRED NUMBER ◇     506
       ◀───────────  OF STAGES REACHED ?
                             │
                             ▼
              ┌──────────────────────────┐
              │   SAVE THE VALUE OF THE  │ ──╮  508
              │   LEFTMOST SYMBOL OF THE │
              │   ESTIMATED SYMBOLS.     │
              └──────────────┬───────────┘
                             │
                             ▼
        ◇ WHOLE RECEIVED SEQUENCE ◇   NO    ┌──────────────────┐
          PROCESSED ?  510         ──────▶  │ SLIDE THE WINDOW │  512
                             │               │ ONE SYMBOL       │
                             ▼               │ AHEAD            │
                        ┌─────────┐          └──────────────────┘
                        │   END   │
                        └─────────┘
```

INITIAL ESTIMATION IN FIRST STAGE — 500

SET UP SLIDING WINDOWS — 502

ESTIMATE 2 MIDDLE SYMBOLS IN SLIDING WINDOW TO MAXIMIZE FORMULA (3) FOR ALL USERS — 504

DESIRED NUMBER OF STAGES REACHED ? — 506 — NO

SAVE THE VALUE OF THE LEFTMOST SYMBOL OF THE ESTIMATED SYMBOLS. — 508

WHOLE RECEIVED SEQUENCE PROCESSED ? — 510 — NO

SLIDE THE WINDOW ONE SYMBOL AHEAD — 512

Fig. 5